(19) Europäisches Patentamt
European Patent Office
Office européen des brevets

(11) **EP 3 168 953 A1**

(12) **EUROPEAN PATENT APPLICATION**

(43) Date of publication:
**17.05.2017 Bulletin 2017/20**

(51) Int Cl.:
***H02J 5/00*** (2016.01)

(21) Application number: **15194497.2**

(22) Date of filing: **13.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **TE Connectivity Germany GmbH**
**64625 Bensheim (DE)**
• **TE Connectivity Nederland B.V.**
**5222 AR 's Hertogenbosch (NL)**

(72) Inventors:
• **HABRAKEN, Gied**
**5551 HX Valkenswaard (NL)**

• **DITTNER, Jeroen**
**5245 AP Rosmalen (NL)**
• **MANG, Benjamin**
**68259 Mannheim (DE)**
• **HOSSAINI, Reza**
**63165 Mühlheim am Main (DE)**
• **ABOULKASSEM, Samir**
**64291 Darmstadt (DE)**
• **LANGE, Felix**
**60323 Frankfurt am Main (DE)**

(74) Representative: **Grünecker Patent- und Rechtsanwälte PartG mbB Leopoldstraße 4 80802 München (DE)**

(54) **CONTACTLESS CONNECTOR SYSTEM HAVING FEEDBACK FROM SECONDARY SIDE**

(57) The present invention relates to a contactless connector system having a power transmitting connector (102) has a primary sided inductive coupling element ($L_p$) and a resonant circuit (110) for generating a magnetic field at said primary sided inductive coupling element ($L_p$) from an input power. A power receiving connector (104) that is mateable with said power transmitting connector (102) has a secondary sided inductive coupling element ($L_s$) that is operable to receive electric power when being electromagnetically coupled with said primary sided inductive coupling element ($L_p$). A bi-directional data link is formed between said transmitting and receiving connectors (102, 104). A secondary sided sensing unit (136) is operable to measure at least one secondary sided operational parameter, and the operation of said resonant circuit (110) is controlled in response to a combination of said at least one secondary sided operational parameter and at least one primary sided operational parameter.

FIG. 3

**Description**

The present invention relates to a contactless connector system and a belonging method of controlling a contactless connector system for inductively transmitting power between a power transmitting connector and a power receiving connector.

The principle of inductive energy transfer serves in a plurality of applications as physical basis of technical development of a large number of applications. An essential element in case of an inductive energy transfer is a loosely coupled conductor, which represents magnetic coupling of an inductor or a magnetic winding in a primary sided power transmission device with an inductor or a magnetic winding in a target device. During operation, energy is inductively transferred between the primary sided part and the secondary sided part. If the secondary sided part is removed from the primary sided part, the energy transfer is interrupted. In this context, the term "contactless" is used to indicate that energy transfer can be realized without any ohmic connection between corresponding electrical contacts on the primary sided and secondary sided parts, respectively.

Omission of electrical contacts is of great importance for many applications in different areas of application. This applies specifically to applications with high demands in the mechanical set up of the electric connections between the power source and sink in which technically complex plugs and cables can be avoided by application of inductive energy transfer (IE). Further, technical energy supply system components based on IE can be protected from environmental impacts without making the mechanical set up unnecessarily complex by appliance of outsourced connectors. Moreover, in some application areas for IE, the use of electrical connections has to be avoided in light of technical feasibility. For example, in explosion prone environments or during operation of the system components in conductive and/or aggressive media it may be technically advantageous to rely on systems that allow contactless energy transfer. Furthermore, the use of IE can improve the reliability of systems in which the devices and eventually the electrical contacts of these devices are exposed to high stress. This is the case on the one hand for systems with rotating or moveable parts, since components based on IE allow avoiding the use of wiper contacts, which are prone to wear due to friction. In addition, IE technologies can be advantageously used in devices with connectors, which would have to be otherwise dimensioned for a plurality of plugs.

Contactless connectors that reliably transmit electric power, signals, and data without an ohmic contact between each other are used in many different applications fields. In particular, in the field of industrial robot systems where moving parts and electronic components that need to stay reliably connected in harsh environments are involved, contactless connector system are needed which effectively transmit power and data and are not affected by harsh environments, such as water, dust or vibrations.

An example of such a contactless connector system is disclosed in European patent specification EP 2581994 B1. According to this document, a contactless connector system is provided which has primary sided and secondary sided inductive coupling elements that can be mated for wirelessly transmitting electric power from the primary to the secondary side. Moreover, a bi-directional data transmission is effected via two antenna elements establishing a radio frequency data link between the mated two parts of the connector system.

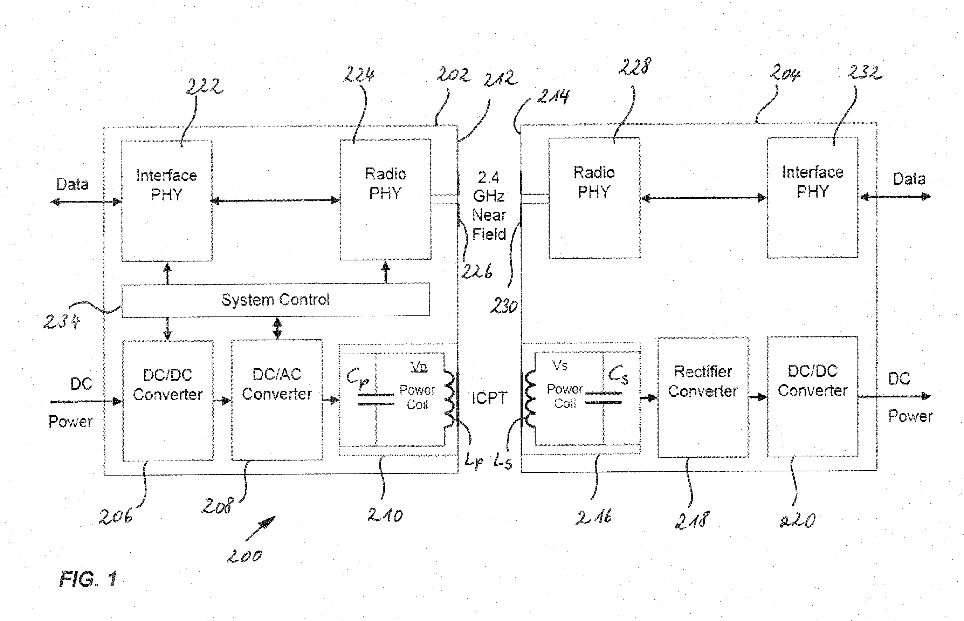

Presently, the company TE Connectivity produces a contactless connector system under the name ARISO, which is schematically depicted in Fig. 1. This known contactless connector system 200 comprises a power transmitting connector 202 and a power receiving connector 204. The power transmitting connector 202 has a primary sided inductive coupling element $L_p$ (also referred to as primary sided power coil) which is powered from an input power source. The input power may for instance be a DC power which is transformed into an alternating voltage by means of a DC/DC converter 206 and a subsequent DC/AC converter 208. As this is schematically shown in Fig. 1, the power coil $L_p$ is part of a resonant circuit 210 which comprises a capacitor $C_p$ in parallel to the power coil $L_p$.

When the two mating surfaces 212, 214 of the power transmitting connector 202 and the power receiving connector 204 are in sufficiently close contact, the secondary power coil $L_s$ is magnetically coupled to the primary sided power coil $L_p$. The secondary sided power coil $L_s$ is part of a secondary sided resonant circuit 216. By means of the electromagnetic coupling, power is transmitted from the primary side to the secondary side. The secondary sided resonant circuit 216 is connected to a rectifier circuit 218 (comprising for instance a bridge rectifier) and a subsequent DC/DC converter 224 generating a regulated DC output power.

In addition to the power transmission, the contactless connector system 200 is further equipped with means for establishing a bi-directional data link for transmitting data through the connector system. A primary sided data communication interface 222 communicates with a first external component connected to the power transmitting connector 202 (not shown in the Figures). A primary sided data transceiver element 224 having one or more antenna elements 226 converts the data signals from the communication interface 222 into a radio signals and accordingly converts received radio signals into electrical data signals which are input into the communication interface 222.

The power receiving connector 204 is provided with a corresponding secondary sided data transceiver element 228 having one or more antennae 230 which receive signals from the primary side and transmit signals from the secondary side towards the primary side via a wireless near field radio link. A secondary sided data communication interface 232 is connected to the secondary sided data transceiver element 228 for communicating with a second external component (not shown in the Figures) connected to said power receiving connector 204.

A primary sided control unit 234 is provided for controlling the operation of the resonant circuit 210, the primary sided data communication interface 222, and the primary sided data transceiver element 224.

However, known contactless connector systems which transmit both power and data use resonant driving circuitry to transmit the power in an efficient way and control these resonant systems based on a feed forward control in the sense that no information measured and transmitted from the secondary side is available for the control. This is in particular true for contactless connector systems that have to meet strict requirements regarding their overall size.

Consequently, there is still a need for a contactless connector system that transmits both power and data which is particularly energy efficient, safe, and robust, while it can be fabricated in a particularly cost-efficient way.

This object is solved by the subject matter of the independent claims. Advantageous embodiments of the present invention are the subject matter of the dependent claims.

A contactless connector system according to the present invention comprises a power transmitting connector having a primary sided inductive coupling element that is connected to a power input terminal connectable to a power source providing an input power, a resonant circuit for generating a magnetic field at said primary sided inductive coupling element from said input power, a primary sided data transceiver element for transmitting and receiving data, so that a bi-directional data link is formed between said transmitting and receiving connectors, a primary sided data communication interface connected to said primary sided data transceiver element for communicating with a first external component connected to said power transmitting connector, and a primary sided control unit for controlling an operation of said resonant circuit, said primary sided data communication interface, and said primary sided data transceiver element.

Furthermore, the contactless connector system comprises a power receiving connector that is mateable with said power transmitting connector, said power receiving connector having a secondary sided inductive coupling element that is operable to receive electric power when being electromagnetically coupled with said primary sided inductive coupling element, a secondary sided data transceiver element which in the mated state of the power transmitting and the power receiving connectors is operable to form a bi-directional data link with the primary sided data transceiver element, a secondary sided data communication interface connected to said secondary sided data transceiver element for communicating with a second external component connected to said power receiving connector.

The present invention is based on the idea that the power receiving connector further comprises a secondary sided sensing unit that is operable to measure at least one secondary sided operational parameter, and wherein said primary control unit is connected to said primary sided data communication unit for controlling the operation of said resonant circuit in response to a combination of said at least one secondary sided operational parameter and at least one primary sided operational parameter.

By sensing one or more parameters on the secondary side and transmitting the information via the bi-directional data link to the primary sided connector, the performance of the connector system can be improved significantly. A wide variety of parameters can be monitored on the secondary side as well as on the primary side, and the information can be used by the primary sided control unit for controlling the power transfer.

In particular, the heat management of the contactless connector system according to the present invention can be improved by measuring the temperature of the power transmitting connector and the power receiving connector.

Furthermore, a power over distance and an out of range management can be implemented by monitoring the voltages across the primary and the secondary inductive coupling elements. The ratio of these two voltages can be used as a gauge for the distance between the two inductive coupling elements. Normally, the maximum power that can be transferred decreases when the distance between the power transmitting connector and the power receiving transmitter increases. In current connector system, the power transfer is maximized to a fixed level and is set to zero in case the distance is about a certain level. By evaluating the ratio of voltages across the primary and the secondary inductive coupling elements, the connector system knows what the current distance between the primary and secondary inductive coupling elements is and can calculate the amount of power that can be transferred there from. Moreover, if necessary, the information about the actual distance, the transferable power, and the fact that the distance is too large (in other words that the power receiving connector is out of range) can be transmitted to external components.

The contactless connector system according to the present invention furthermore has the advantage that a temperature dependent power transmission can be implemented by monitoring the temperature of both the power transmitting and the power receiving connector together with the voltages across the primary and the secondary inductive coupling elements. conventionally, a higher power level causes a higher temperature at both the transmitting and the receiving side view to higher lots is in the system. According to the present invention, the power level that can be transferred can be increased when the temperature levels in the power transmitting connector and the power receiving connector are low.

According to the present invention, a simpler control algorithm can be implemented by varying the DC input voltage of the power coil driver (e.g. a push-pull driver) in response to the load and the distance between the mating ends of the power transmitting connector and the power receiving connector.

Furthermore, the contactless connector system according to the present invention has the advantage that an improved foreign object detection (FOD) can be provided by monitoring the low at the power transmitting connector and the power transceiver in connector. If the transmitted power is about the expected value which depends on the power receiving load and the distance, the system can be switched off.

Moreover, switching the power transmission on and off can be made more reliable because the data transmitting parts be activated and can establish the data link while the power part is still inactive. This is mainly due to the fact that the data transmitting parts only need a low voltage and little supply power.

Advantageously, the contactless connector system according to the present invention can be programmable regarding the under voltage lockout threshold, so that the threshold also includes the hysteresis by measuring the input voltage of the system.

The contactless connector system according to the present invention preferably comprises a first antenna element and a second antenna element which in the mated state of the connector system and bi-directional radiofrequency communication. Radiofrequency communication is a well established and robust way of providing a wireless near field data link. However, it is clear for a person skilled in the art that also infrared or optical data transmission can be used for a contactless connector system according to the present invention. In particular, the first and second antenna element may comprise circularly polarized antennae. This has the advantage that the contactless connector system is completely rotational symmetry regarding their direction of mating with respect to their longitudinal axis hence, a rotation angle independent mating of the power transmitting connector and the power receiving connector is ensured. The circular polarized antennae can either be left-handed or right-handed polarized to provide a proper connection.

The contactless connectors may furthermore include two antenna elements each, i. e. a first antenna element for enabling a data transmission by the respective connector, and a second antenna element for receiving data from the respective other connector. Preferably, the two antenna elements on each connector have a differently handed polarization, in order to separate an uplink channel (from the power receiving connector to the power transmitting connector) and a downlink channel (from the power transmitting connector to the power receiving connector) from each other.

According to an advantageous embodiment of the present invention, the power receiving connector comprises a secondary sided auxiliary winding which in the mated state is inductively coupled to the primary sided inductive coupling element or to an additional primary sided auxiliary winding. Such an extra winding on the secondary side can be advantageously used for performing a distance measurement between the power transmitting connector and the power receiving connector.

Furthermore, the additional auxiliary windings on the primary sided power coil as well as on the secondary sided power coil can be used for providing an improved foreign object detection (FOD).

Advantageously, an extra winding at both the primary (i.e. transmitting) side and at the secondary (i.e. receiver) side is added which is not loaded or connected to the power coils. The primary/transmitting side can be driven with a small high-frequency signal such that a resonance occurs with the primary capacitor and the resonance circuit at the secondary side (by selecting proper components).

If the coils at both transmitting and receiving side are tuned to the same frequency, the so created resonance will be disturbed easily by any foreign object that influences magnetic fields. This disturbance can be measured via the detuning of the resonance. This method thereby improves the detection of foreign objects.

If the same extra windings are used as for the distance measurement care has to be taken to avoid interference between the distance measurement and the foreign object measurement. This can be done e. g. by taking a resonance frequency significantly higher than the frequency used for the power transfer (normally around 200 kHz).

According to a first advantageous embodiment, a quadrature amplitude modulation (QAM) scheme can be used for implementing the feedback from the secondary side. However, it is clear for a person skilled in the art that many other well established radio frequency (RF) modulation schemes exist which can also be used with the contactless connector system according to the present invention.

According to the present invention, when bi-directionally transmitting data between the two connectors of the contactless connector system, several different separation schemes can be used for separating the high bit-rate data channel containing the pay load data which have to be transmitted from the first to the second external component, and the control channel comprising the low bit-rate control data that are coupled back to the primary side.

As this is generally known, the separation can be done in the time domain by performing a time-division multiplexing, in the frequency domain by providing a frequency division multiplexing, and in the spatial domain by using two physically separated antennae for transmission and reception of the different types of data at each connector. In the latter case, two complete RF systems are implemented, one for the data stream and one for the control stream. Also the antennae are separated from each other.

Furthermore, a channel separation can also be achieved by using a different polarization of the radio waves. In this case, also two complete RF systems are implemented, but instead of using two antennae only one antenna is used. One signal is transmitted with e. g. horizontal polarization or right handed polarization, while the second signal is transmitted via vertical polarization or left handed polarization.

The present invention also relates to a corresponding method of controlling a contactless connector system for inductively transmitting power between a power transmitting connector and a power receiving connector. The method comprises the following steps:

generating a magnetic field at a primary sided inductive coupling element by transforming an input power by means of a resonant circuit,

operating a secondary sided inductive coupling element to receive electric power when being electromagnetically coupled with said primary sided inductive coupling element,

establishing a bi-directional data link between said power transmitting connector and said power receiving connector,

measuring at least one secondary sided operational parameter by means of a secondary sided sensing unit provided in said power receiving connector,

controlling the operation of said resonant circuit in response a combination of secondary sided control data indicative of said at least one secondary sided operational parameter, and primary sided control data indicative of at least one primary sided operational parameter.

By operating a contactless connector system according to such a control method, a particularly safe and power efficient wireless transfer of power and communication data can be achieved.

According to a further embodiment of the method, the bi-directional data link uses a quadrature amplitude modulation (QAM) for generating a radio frequency signal from a serial bit stream.

According to a further embodiment of the method, the bi-directional data link uses time division multiplexing or frequency division multiplexing for combining the secondary sided control data with data transmitted via the bi-directional data link.

According to another embodiment of the method, the bi-direction data link uses spatial separation for combining the secondary sided control data with data transmitted via the bi-directional data link.

According to a further embodiment of the method, the bi-direction data link uses left and right handed polarization of the RF signal to realize full duplex.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:

**FIG. 1**    is a block diagram of a conventional contactless connector system;

**FIG. 2**    is a perspective drawing of a contactless connector system according to the present invention;

**FIG. 3**    is a block diagram of a contactless connector system according to a first embodiment of the present invention;

**FIG. 4**    is a schematic diagram of a transmitting part of a transceiver unit according to the present invention;

**FIG. 5**    is a schematic diagram of a receiving part of a transceiver unit according to the present invention;

**FIG. 6**    is a schematic diagram illustrating a time division multiplexing scheme for transmitting a data channel and a control channel;

**FIG. 7**    is a schematic diagram illustrating a time division multiplexing scheme for receiving a data channel and a control channel;

**FIG. 8**    is a schematic diagram illustrating a further technique of channel separation in the frequency domain;

**FIG. 9**      is a circuit diagram illustrating the inductive power transfer according to a first embodiment;

**FIG. 10**     is a circuit diagram illustrating the inductive power transfer according to a second embodiment;

**FIG. 11**     is a circuit diagram illustrating the inductive power transfer according to a first embodiment;

**FIG. 12**     is a circuit diagram illustrating the distance measurement with a secondary auxiliary winding;

**FIG. 13**     is a circuit diagram illustrating the distance measurement with a primary and a secondary auxiliary winding;

**FIG. 14**     is a circuit diagram of a power transmission circuit according to a further embodiment, comprising a primary sided auxiliary winding and a secondary sided auxiliary winding.

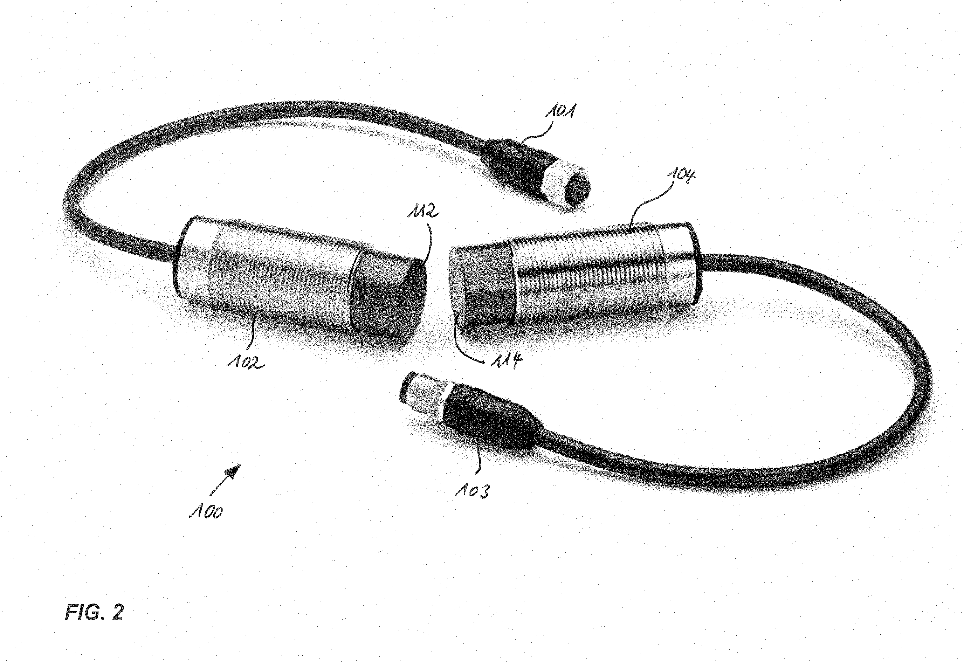

The present invention will now be explained in more detail with reference to the Figures and firstly referring to Fig. 2. Fig. 2 shows a perspective view of a contactless connector system 100 according to a possible embodiment of the present invention. The contactless connector system 100 comprises a power transmitting connector 102 which can be connected to a power source (not shown in the Figures) via a first terminal 101. The power transmitting connector 102 defines a primary side of the contactless connector system 100. The contactless connector system 100 further comprises a power receiving connector 104 which defines a secondary side of the contactless connector system 100. A second terminal 103 is provided for connecting the system to a secondary sided external component (not shown in the Figures).

When the mating surfaces 112, 114 of the power transmitting connector 102 and the power receiving connector 104, respectively, are brought sufficiently close to each other, the power receiving connector 104 is electromagnetically coupled with the power transmitting connector 102 for so that a contactless inductive energy transfer from the primary side to the secondary side can take place.

In addition to allowing the inductive power transfer, the contactless connector system 100 is also able to provide a bi-directional data link between the two connectors 102, 104.

The contactless connector system 100 as shown in Fig. 2 has the advantage of having a high degree of freedom of movement that includes tilt, angle, and misalignment. Moreover an improved design flexibility and cost savings can be achieved by transferring power and data signals through fluids and (non-ferromagnetic) walls. Moreover, the connection provides a rotational freedom that enables a faster rotation by angles of more than 360°. The contactless connector system 100 guarantees unlimited mating cycles in wet and dusty environments, thus reducing maintenance costs. Safe and reliable connections can be provided in harsh environments due to vibration resistance and fully sealed couplers.

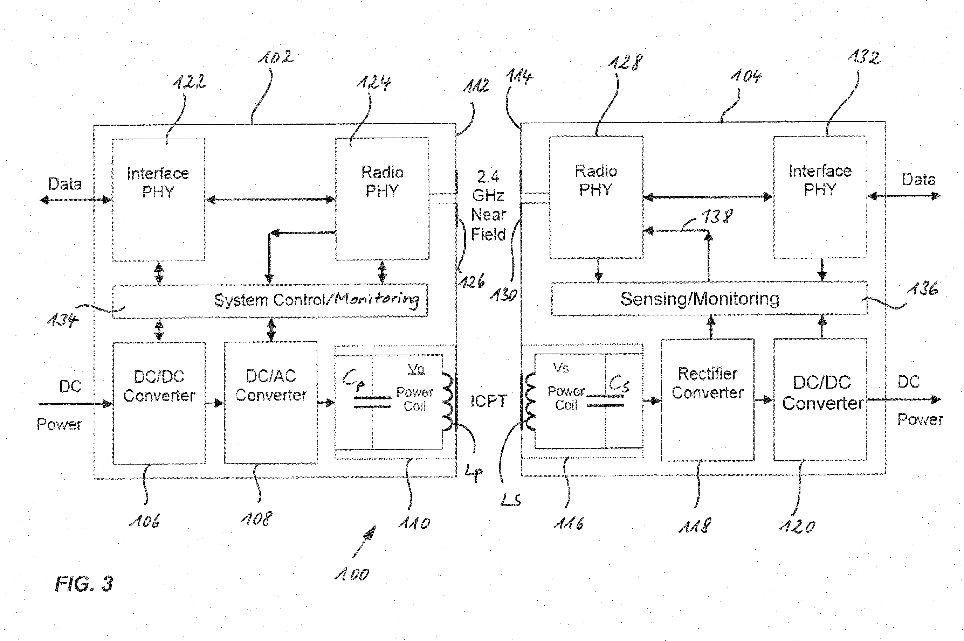

Fig. 3 shows a block diagram of a first embodiment of the contactless connector system 100 according to the present invention. As already mentioned with reference to Fig. 2, the contactless connector system 100 comprises a power transmitting connector 102 and a power receiving connector 104. The power transmitting connector 102 has a primary sided inductive coupling element $L_p$ (also referred to as primary sided power coil) which is powered from an input power source. The input power may for instance be a DC power which is transformed into an alternating voltage by means of a DC/DC converter 106 and a subsequent DC/AC converter 108. As this is schematically shown in Fig. 3, the power coil $L_p$ is part of a resonant circuit 110 which comprises a capacitor $C_p$ in parallel to the power coil $L_p$. The resonant circuit 110, however, may of course also be a serial resonant circuit.

When the two mating surfaces 112, 114 of the power transmitting connector 102 and the power receiving connector 104 are sufficiently close to each other, the secondary sided power coil $L_s$ is magnetically coupled to the primary sided power coil $L_p$. The secondary sided power coil $L_s$ is part of a secondary sided resonant circuit 116. By means of the electromagnetic coupling, power is transmitted from the primary side to the secondary side. The secondary sided resonant circuit 116 is connected to a rectifier circuit 118 (comprising for instance a bridge rectifier) and a subsequent DC/DC converter 124 generating a regulated DC output power.

In addition to the power transmission, the contactless connector system 100 is further equipped with means for establishing a bi-directional data link for transmitting data through the connector system. A primary sided data communication interface 122 communicates with a first external component connected to the power transmitting connector 102 (not shown in the Figures). A primary sided data transceiver element 124 having one or more antenna elements 126 converts the data signals from the communication interface 122 into a radio signals and accordingly converts received radio signals into electrical data signals which are input into the communication interface 122.

The power receiving connector 104 is provided with a corresponding secondary sided data transceiver element 128 having one or more antenna elements 130 which receive signals from the primary side and transmit signals from the secondary side towards the primary side via a wireless near field radio link. A secondary sided data communication interface 132 is connected to the secondary sided data transceiver element 128 for communicating with a second external component (not shown in the Figures) connected to said power receiving connector 104.

A primary sided control unit 134 is provided for controlling the operation of the resonant circuit 110, the primary sided data communication interface 122, and the primary sided data transceiver element 124.

According to the present invention, the power receiving connector 100 for further comprises a secondary sided sensing unit 136. The secondary sided sensing unit 136 monitors at least one secondary sided operational parameter and generates a control signal 138 which is transmitted to the primary side to be evaluated by the primary sided control unit 134. In other words, the data link between the power transmitting connector 102 and the power receiving connector 104 carries in addition to the payload data that are communicated between the two components which are interconnected by the contactless connector system additional control data which provide information about secondary sided parameters to the primary sided control unit 134.

This information allows improving the overall performance of the contact connector system. Moreover, also the primary sided control unit 134 may comprise means for measuring one or more operational parameters on the primary side.

In particular, the following parameters can be monitored and controlled according to the present invention.

On the transmitter side following parameters can be measured:

   a. The input voltage and input current, and as a result the input power is known

   b. The temperature of the power transmitting connector 102

   c. The input voltage for the DC/AC converter 108

   d. The voltage $V_p$ across the primary sided power coil $L_p$, the current through the primary sided power coil $L_p$, and the phase between the voltage $V_p$ across the primary sided power coil $L_p$ and the current through the primary sided power coil $L_p$, and as a result the transmitted power is known

   e. Presence of data on the primary sided data communication interface 122, i. e. whether data is transmitted or not

On the receiver side the following parameters can be measured:

   a. The output voltage and output current, and as a result the output power is known.

   b. The temperature of the power receiving connector 104

   c. The voltage $V_s$ across the secondary sided power coil $L_s$, the current through the secondary sided power coil $L_s$, and the phase between the voltage $V_s$ across the secondary sided power coil $L_s$ and the current through the secondary sided power coil $L_s$, and as a result the received power is known

   d. Presence of data on the secondary sided data communication interface 132, i. e. whether data is transmitted or not

Having the information about $V_p$ and $V_s$ allows system control to determine the distance between the power transmitting connector 102 and the power receiving connector 104. Knowing the distance enables functionalities such as a reliable power-over-distance de-rating.

Advantageously, by providing the feedback according to the present invention, the following system features and characteristics of the contactless connector system 100 can be provided.

**1. Under Voltage Lockout (hysteresis):**

By monitoring the input voltage at the power transmitting connector 102 an improved under voltage lockout mechanism including reliable hysteresis can be implemented.

**2. Inrush Current Limiting:**

The power receiving connector 104 can be put into standby as long as the power transmitting connector 102 is still starting up. This will reduce the inrush current at the receiver side. Once the power transmitting connector 102 is fully operational, the power receiving connector 104 can be put into normal operation.

### 3. Soft Start:

As a resulting feature from the limitation of the inrush current, a soft start function can further be implemented.

### 4. Power Output Short Circuit Protection (constant current/current fold-back):

For the conventional connector system explained with reference to Fig. 1, there exists the disadvantage that the system control continuously tries to activate the power output, if there is a short circuit at the output of the power transmitting connector. By monitoring the output voltage and current, this continuous switch-on / switch-off behavior can be avoided if necessary.

### 5. Power Operational Readiness:

By receiving the information about the power level on the side of the power receiving connector 104 it is possible to send a feedback signal when operational readiness is reached.

### 6. Out-of-Power Range:

If the distance between the power transmitting connector 102 and the power receiving connector 104 is known, a minimum power-level with a fixed distance can be defined where a working system can be guaranteed (so called power-over-distance de-rating). If the distance (or the load) becomes too high, the contactless connector system can be switched off in a reliable way.

### 7. Over Temperature Protection (hysteresis):

The temperature of the contactless connector system is based on two factors: the ambient temperature and the temperature rise inside the device. Currently, only the temperature at the transmitter side is monitored leaving the possibility for the receiver to get overheated. Monitoring the temperature at the receiver side allows for control of (over-)heating on both sides and, in case of a critical temperature, the system can be powered off.

Furthermore, measuring the temperature at start-up and after some time the internal temperature rise can be determined and a kind of power-over-temperature can be implemented.

### 8. Foreign Object Protection:

Currently, the fail-safe foreign object protection is hardly possible since the power output at the receiver side is unknown. The system shuts down when too much power is drawn from the input, but, since the power delivered at the output, quite some power can still be generated in metal items between the transmitter and receiver side. By knowing the power levels on both transmitter and receiver side, a far better understanding where the power is sent to will be available and therefore the foreign object protection functionality can be improved substantially.

### 9. Data Reverse Polarity Protection:

By providing a feedback information about whether data is present upon the input line or not, the system is also allowed to consider a power switch off in case a reversed polarity failure is given.

### 10. Data Output Short Circuit Protection:

A system shut down and accordingly a system protection is granted upon feedback of a short circuit on the data interfaces.

### 11. Data Operational Readiness:

Readiness is achieved at a defined minimum power-level. This power level is reached when the power is high enough to support the RF-chip for the lowest bit rate that can be applied. It is also possible, with additional distance information, to ensure power-levels and bitrates according to defined fixed distances.

**12. Diagnostics:**

Additional information and a comparable overview of operational parameters on the primary side and the secondary side support any post-analysis and accordingly diagnose malfunctions and allow for real-time system control. Furthermore, an operator can be informed about the status of the system and possible failures like short circuits, over temperatures, etc.

**13. Programmability:**

With an additional control instance in between the power and the RF portion of each counterpart of the system, it possible to enable programmability for the firmware. The maximum power or data rate for example can be controlled via software.

**14. External Wake-up:**

The power receiving connector can be put to standby until a wake-up is received, either from the transmitter side or from its data communication interface 132.

In order to feed back control data 138 along with the other (payload) data that are transmitted over the bi-directional wireless data link, the present invention provides several techniques of introducing the control data into the payload data stream.

It is important that the control data 138 are merged with the payload data and the power receiving connector 104 to be sent to the power transmitting connector 102 in a way that the payload data stream is not influenced by this merging process.

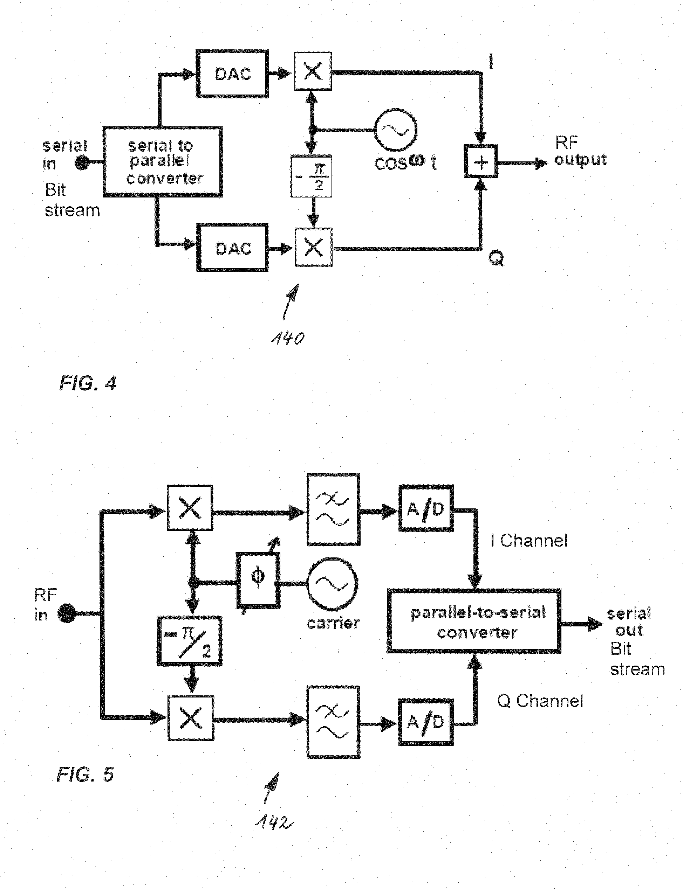

For generating the radiofrequency (RF) signal that is transmitted by means of the antenna 130, the data to be transmitted are modulated onto a carrier signal as this is generally known. Although many radiofrequency modulation schemes are known in the art, in the following only the quadrature amplitude modulation (QAM) technique will be explained in more detail and with reference to Figures 4 and 5. According to the present invention, the secondary sided transceiver element 128 comprises a modulation unit 140 for generating an RF output signal from a serial bit stream. Correspondingly, the primary sided transceiver element 124 comprises a demodulation unit 142.

Like all modulation schemes, QAM conveys data by changing some aspect of a carrier signal, or the carrier wave (usually a sinusoid) in response to a data signal. In the case of QAM, the amplitude of two waves, 90° out-of-phase with each other (in quadrature), are changed (modulated or keyed) to represent the data signal. For demodulating the transmitted signal, these two modulated signals can be demodulated using a coherent demodulator. Such a receiver multiplies the received signal separately with both a cosine and sine signal to produce the received estimates of I(t) and Q(t), respectively. Because of the orthogonality property of the carrier signals, it is possible to detect the modulating signals independently.

For merging the control signal and the payload signal according to the present invention, any suitable technique of transferring two different channels in an RF system can be employed. In particular the following options can be used:

    a. Separation in the time domain, i. e. Time Division Multiplexing

    b. Separation in the frequency domain, i. e. Frequency Division Multiplexing

    c. Separation in the spatial domain

    d. Separation using different polarization

The different options of how to merge the low bit-rate control channel with the high bit-rate data channel and transferring all the information to the other side with as minimal influence of the data channel is shown in following examples for the case where a QAM based RF transmission system is used.

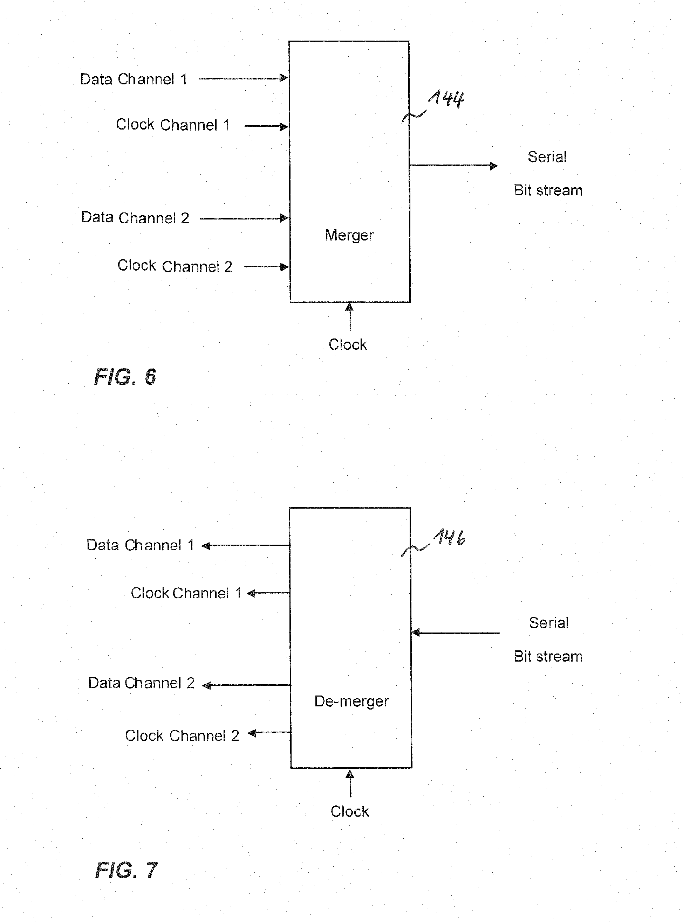

When using separation in the time domain, the fact is used that in case a 60 GHz ISM band to transfer a 1 Gbps data channel, not the full available ISM band is used for the payload data transfer. As a result, some bandwidth is still available for the control channel. Merging the payload data channel (channel 1) and the control channel (channel 2) can be done via an increase of the bit rate as depicted in Fig. 6. Subsequently, the two channels are input into a merger 144 for generating the serial bit stream that is fed into the modulation unit 140 of Fig. 4. On the receiving side, i. e. in the power transmitting connector 102, the serial bit stream output by the demodulation unit 142 of Fig. 5 is separated into two channels using a de-merger 146.

For using a separation in the frequency domain, two different options are available.

Firstly, as can be seen from Fig. 4 the input data stream is split into two data streams to create the QAM like modulation. Instead of splitting the data stream, the "data channel" can be connected to one input (I-channel) while the "control channel" can be connected to the other input (Q-channel). At the receiving side, i. e. in the power transmitting connector 102, the parallel-to-serial converter shown in Fig. 5 can be omitted and the data stream is present on the I-channel output and the control stream is present on the Q-channel output.

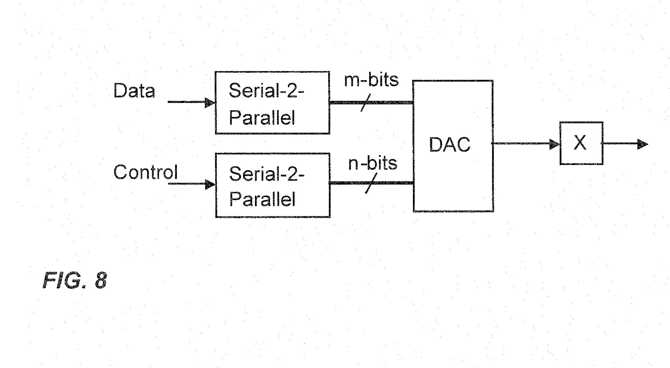

Alternatively, instead of separating the I- and Q- channels, the two data streams can be merged by using the different bit inputs of the digital-to-analog converters (DAC) shown in Fig. 4. This alternative is depicted in Fig. 8.

Furthermore, also a spatial separation of the control data from the payload data can be performed. In this case, two complete RF systems are implemented, one for the data stream and one for the control stream. Also the antennae are separated from each other, so that each of the power transmitting connector 102 and the power receiving connector 104 have separate antennae for transmitting/receiving the control data and the payload data.

Another possibility of separating the control data from the payload data is using a separation by means of the polarization.

In this case, also two complete RF systems are implemented, but instead of using two antennae, only one antenna is used at each of the power transmitting connector 102 and the power receiving connector 104. One signal is then transmitted with e. g. horizontal polarization or right handed polarization while the second signal is transmitted via vertical polarization or left handed polarization.

It has to be noted that the above described merging schemes regarding merging control data and payload data from the power receiver towards the power transmitter, is applicable as well for sending a clock signal over the data stream. In this case a clock and data recovery (CDR) advantageously can be omitted.

As already mentioned above, the control data that are fed back from the power receiving connector 104 to the power transmitting connector 102 according to the present invention may contain a plurality of parameters to be monitored. An important parameter to be monitored is the distance between the power transmitting connector 102 and the power receiving connector 104. The present invention provides several advantageous embodiments that use the control data feedback for determining this distance.

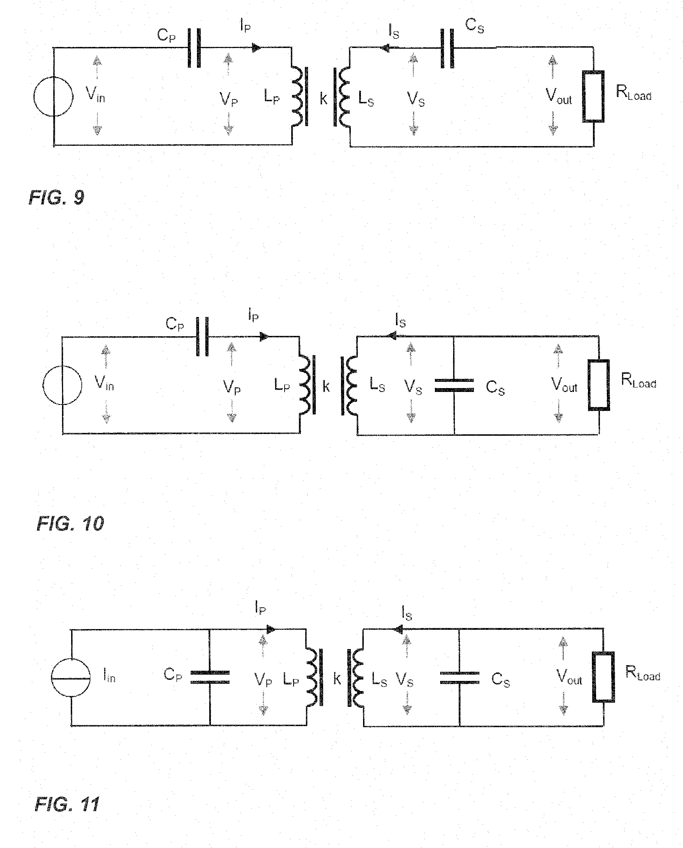

The inductive resonant coupling between the power transmitting connector 102 and the power receiving connector 104 can be achieved by using different resonant circuits 110, 116. In particular, either a parallel resonant circuit or a serial resonant circuit can be used on each side. The configurations that are advantageously used according to the present invention are shown in Figures 9 to 11. As shown in Figure 9, firstly a serial arrangement of the primary capacitor Cp and of the secondary capacitor Cs with the respective inductively coupled coils can be chosen, resulting in a serial resonance on the primary and on the secondary side. Alternatively, a parallel resonance can be provided on the secondary side, whereas the primary resonant circuit is a serial arrangement as this is shown in Fig. 10. For the circuits shown in Fig. 9 and 10, the input is voltage driven by an input Vin.

Alternatively, as shown in Fig. 11, a parallel resonant configuration can also be provided on the primary side. In this case, the input has to be current driven by a current source Iin.

For an inductively coupled power transfer system as shown in Fig. 9, the voltages over the transmitter and receiver coils are given by the following equations (1) and (2).

$$V_p = j\omega \cdot L_p \cdot I_p + j\omega \cdot L_M \cdot I_s \qquad (1)$$

$$V_s = j\omega \cdot L_M \cdot I_p + j\omega \cdot L_s \cdot I_s \qquad (2)$$

Here $V_p$ is the voltage across the primary sided transmitter coil, $V_s$ the voltage across the secondary sided receiver coil, $I_p$ the current through the primary sided transmitter coil, and $I_s$ the current through the secondary sided receiver coil. $L_p$ is the inductance of the primary sided transmitter coil, $L_s$ the inductance of the secondary sided receiver coil, and $L_m$ is the mutual inductance between them.

This mutual inductance can be expressed as a function of the inductances $L_p$ and $L_s$ according to equation (3).

$$L_M = \kappa \cdot \sqrt{L_p \cdot L_s} \qquad (3)$$

In equation (3) $\kappa$ is the coupling coefficient and depends on the distance between the primary sided transmitter coil and the secondary sided receiver coil. As an approximation, the product of the coupling coefficient and the distance between transmitter and receiver coil is constant. Thus, without a load connected to the primary sided transmitter coil and the secondary sided receiver coil ($I_s = 0$), the secondary voltage $V_s$ is a measure for the coupling coefficient and therefore also for the distance. $V_s$ can be expressed by equation (4) for the case that $I_s = 0$.

$$V_s = j\omega \cdot L_M \cdot I_p = j\omega \cdot \kappa \cdot \sqrt{L_p \cdot L_s} \cdot I_p \qquad (4)$$

Since the parameters $L_p$ and $L_s$ are known by design and $I_p$ and $V_s$ can be measured, the coupling factor, and thus the distance, can be calculated using equation (4).

However, there will always be a load on the secondary side which influences the distance calculation. The present invention therefore provides two different ways to overcome this issue.

Firstly, the load can be disconnected temporarily, e. g. by switching off the rectifier 218 shown in Fig. 3. If this is done for a very short period (e. g. less than 1 % of the time), the influence on the power transfer is limited. The drawback of this solution is the need for extra control, for switching off the load for short time periods, and the need for fast measurement of the voltage across the secondary sided receiver coil.

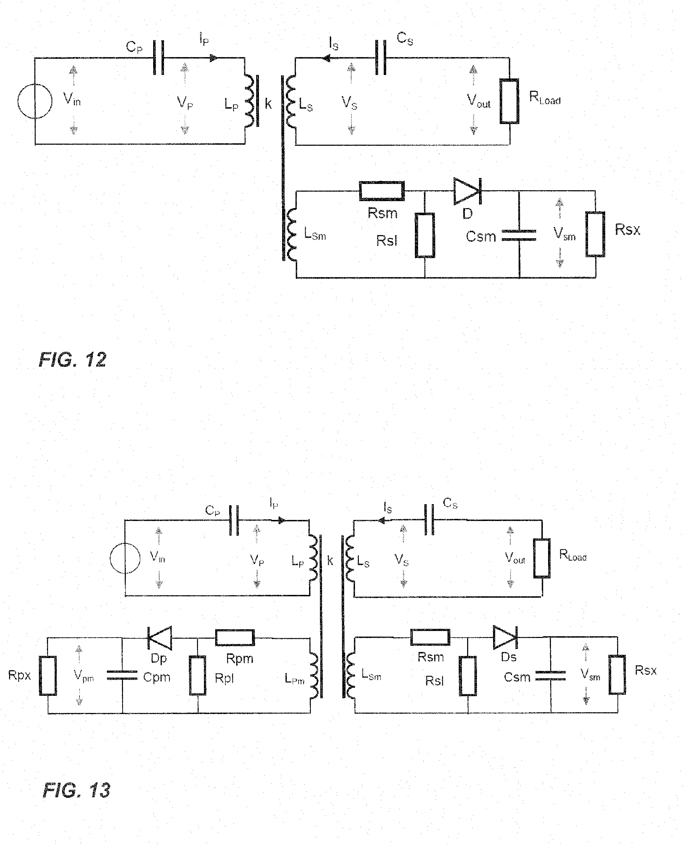

Consequently, according to an advantageous embodiment of the present invention, an extra winding is added to the secondary sided receiver coil which is not loaded. A first example of the resulting resonant circuit for the power transfer is shown in Fig. 12. According to this embodiment, the power receiving connector 104 comprises a secondary sided auxiliary winding $L_{sm}$ which is inductively coupled to the primary side, but is not connected to the output of the secondary sided receiver coil and is therefore practically unloaded. The coupling between the secondary sided auxiliary winding $L_{sm}$ and the secondary power receiving winding $L_s$ should be close to 1. It can be shown that the ratio $V_{ms}/I_p$ of the voltage $V_{ms}$ across the secondary sided auxiliary winding and the current $I_p$ flowing through the primary sided coil is an accurate measure for the coupling factor and thus the distance.

For determining the distance between the power transmitting connector 102 and the power receiving connector 104, the voltage $V_{ms}$ across the secondary sided auxiliary winding $L_{sm}$ is measured. Moreover, the current $I_p$ flowing through the primary sided coil has to be determined in order to calculate the distance. At the primary side, the voltage and current can be measured correctly, independent from the secondary load. Therefore, for the functioning of the measurement, no separate primary sided auxiliary winding is needed.

Measuring the current $I_p$ at the primary sided power transmitting connector 102, however, can be cumbersome. Consequently, according to a further advantageous embodiment, an additional primary sided auxiliary winding can be provided. This configuration which facilitates the voltage measurement on the primary side is illustrated in Fig. 13.

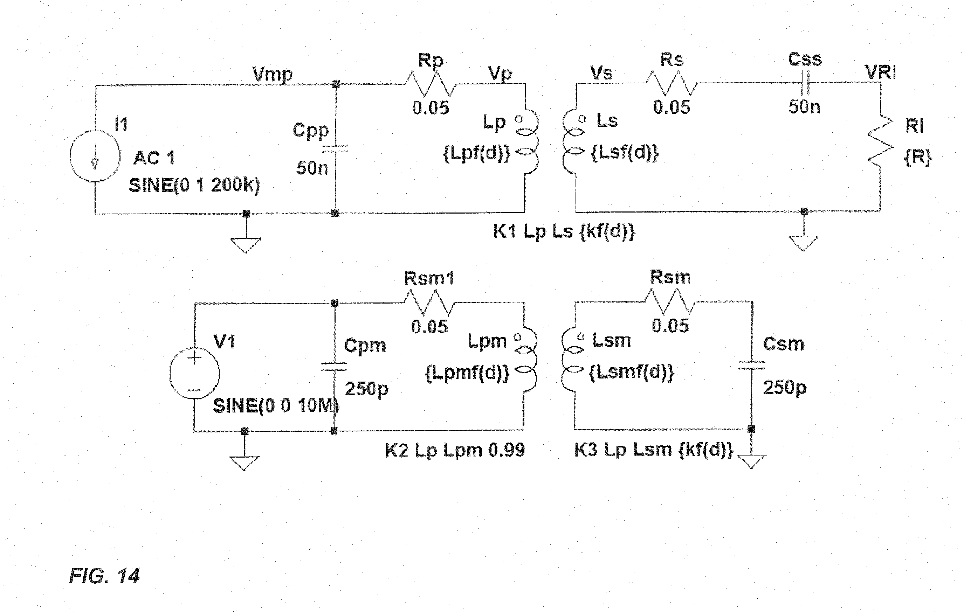

In addition to the measurement of the distance between the power transmitting connector 102 and the power receiving connector 104, a configuration using an auxiliary winding on the primary side and on the secondary side can also be used for allowing a foreign object detection (FOD). Fig. 14 shows an example of a circuit arrangement that can be used to detect whether a ferromagnetic foreign object has entered between the mating surfaces 112, 114 of the power transmitting connector 102 and the power receiving connector 104.

As shown in Fig. 14, foreign object detection can be improved by providing auxiliary windings $L_{pm}$ and $L_{sm}$. According to this embodiment, both auxiliary windings are not loaded and not connected to the power coils $L_p$, $L_s$. An additional high frequency signal V1 with low amplitude is provided for driving the primary sided auxiliary resonant circuit. The components $L_{sm}$, $R_{sm}$, $C_{sm}$ of the resonant circuit on the secondary side are chosen so that in the absence of any foreign object a resonance occurs on the secondary side as well.

If the coils at both transmitting and receiving side are tuned to the same frequency the so created resonance will be disturbed easily by any foreign object that "absorbs" magnetic fields. This disturbance can be measured via the detuning of the resonance. This method thereby improves the detection of foreign objects.

In case that the same auxiliary windings are used for this foreign object detection and for the distance measurement explained above referring to Fig. 13, it has to be ensured that no interference between the distance measurement and the foreign object measurement occurs. To this end, for example, the resonance frequency V1 can be chosen to be significantly higher than the frequency used for the power transfer, which usually lies around 200 kHz.

**REFERENCE NUMERALS**

| Reference Numeral | Description |
| --- | --- |
| 100 | Contactless connector system |
| 101 | First terminal |
| 102 | Power transmitting connector |
| 103 | Second terminal |

(continued)

| Reference Numeral | Description |
|---|---|
| 104 | Power receiving connector |
| 106 | DC/DC converter |
| 108 | DC/AC converter |
| 110 | Primary sided resonant circuit |
| 112 | Mating surface of power transmitting connector |
| 114 | Mating surface of power receiving connector |
| 116 | Secondary sided resonant circuit |
| 118 | Rectifier circuit |
| 120 | DC/DC converter |
| 122 | Primary sided data communication interface |
| 124 | Primary sided transceiver element |
| 126 | Primary sided antenna element |
| 128 | Secondary sided transceiver element |
| 130 | Secondary sided antenna element |
| 132 | Secondary sided data communication interface |
| 134 | Primary sided control unit |
| 136 | Secondary sided sensing and monitoring unit |
| 138 | Control signal |
| 140 | Modulation unit |
| 142 | Demodulation unit |
| 144 | Merger |
| 146 | De-merger |
| 200 | Contactless connector system |
| 202 | Power transmitting connector |
| 204 | Power receiving connector |
| 206 | DC/DC converter |
| 208 | DC/AC converter |
| 210 | Primary sided resonant circuit |
| 212 | Mating surface of power transmitting connector |
| 214 | Mating surface of power receiving connector |
| 216 | Secondary sided resonant circuit |
| 218 | Rectifier circuit |
| 220 | DC/DC converter |
| 222 | Primary sided data communication interface |
| 224 | Primary sided transceiver element |
| 226 | Primary sided antenna element |
| 228 | Secondary sided transceiver element |
| 230 | Secondary sided antenna element |

(continued)

| Reference Numeral | Description |
|---|---|
| 232 | Secondary sided data communication interface |
| 234 | Primary sided control unit |

**Claims**

1. Contactless connector system (100) comprising:

   a power transmitting connector (102) having
   a primary sided inductive coupling element ($L_p$) that is connected to a power input terminal connectable to a power source providing an input power,
   a resonant circuit (110) for generating a magnetic field at said primary sided inductive coupling element ($L_p$) from said input power,
   a primary sided data transceiver element (124) for transmitting and receiving data, so that a bi-directional data link is formed between said transmitting and receiving connectors (102, 104),
   a primary sided data communication interface (122) connected to said primary sided data transceiver element (124) for communicating with a first external component connected to said power transmitting connector (102), and
   a primary sided control unit (134) for controlling an operation of said resonant circuit (110), said primary sided data communication interface (122), and said primary sided data transceiver element (124),
   a power receiving connector (104) that is mateable with said power transmitting connector (102), said power receiving connector (104) having
   a secondary sided inductive coupling element ($L_s$) that is operable to receive electric power when being electromagnetically coupled with said primary sided inductive coupling element ($L_p$),
   a secondary sided data transceiver element (128) which in the mated state of the power transmitting (102) and the power receiving connectors (104) is operable to form a bi-directional data link with the primary sided data transceiver element (124),
   a secondary sided data communication interface (132) connected to said secondary sided data transceiver element (128) for communicating with a second external component connected to said power receiving connector (104),
   wherein said power receiving connector (104) further comprises a secondary sided sensing unit (136) that is operable to measure at least one secondary sided operational parameter,
   and wherein said primary sided control unit (134) is connected to said primary sided data communication interface (122) for controlling the operation of said resonant circuit (110) in response to a combination of said at least one secondary sided operational parameter and
   at least one primary sided operational parameter.

2. Contactless connector system according to claim 1, wherein said primary sided transceiver element (124) comprises a primary sided antenna element (126) and said secondary sided transceiver element (128) comprises a secondary sided antenna element (130), wherein said antenna elements (126, 130) in a mated state of the connector system (100) are operable to allow a bi-directional radio frequency communication.

3. Contactless connector system according to claim 1 or 2, wherein said primary sided operational parameter comprises a primary voltage ($V_p$) across said primary sided inductive coupling element ($L_p$), and wherein said secondary sided operational parameter comprises a secondary voltage ($V_s$) across said secondary sided inductive coupling element, and wherein the primary control unit (134) is operable to calculate, based on these parameters, a distance between the primary sided inductive coupling element ($L_p$) and the secondary sided inductive coupling element ($L_s$), or to calculate, based on these parameters, a power loss between the power at the input of the primary side and the output power at said secondary side.

4. Contactless connector system according to claim 2 or 3, wherein said first and second antenna elements (126, 130) each comprise a circularly polarized antenna.

5. Contactless connector system according to one of the preceding claims, wherein the secondary sided sensing unit (136) comprises temperature measurement unit for generating a temperature value indicating the temperature of the power receiving connector, and wherein said temperature value is transmitted to the primary side via said bi-directional data link.

6. Contactless connector system according to one of the preceding claims, wherein said power receiving connector (104) comprises a secondary sided auxiliary winding ($L_{sm}$) which in the mated state is inductively coupled to said primary sided inductive coupling element ($L_p$) or to a primary sided auxiliary winding ($L_{pm1}$).

7. Contactless connector system according to claim 6, wherein said power transmitting connector (102) comprises a primary sided auxiliary winding ($L_{pm1}$) and a high-frequency source coupled thereto, wherein said secondary sided auxiliary winding is coupled to a secondary sided resonant circuit which is operable to perform a high-frequency resonant oscillation when the secondary sided and primary sided auxiliary windings are properly mated, and wherein the secondary sided sensing unit is operable to detect the presence or absence of the high-frequency resonant oscillation.

8. Contactless connector system according to one of the claims 2 to 7, wherein said secondary sided transceiver element (128) comprises a modulator unit for merging control signals generated by said secondary sided sensing unit with data output by said secondary data communication interface.

9. Contactless connector system according to claim 8, wherein said primary sided transceiver element (124) comprises a demodulator unit for de-merging said control signals and said data.

10. Method of controlling a contactless connector system (100) for inductively transmitting power between a power transmitting connector (102) and a power receiving connector (104), the method comprising:

generating a magnetic field at a primary sided inductive coupling element ($L_p$) by transforming an input power by means of a resonant circuit,
operating a secondary sided inductive coupling element to receive electric power when being electromagnetically coupled with said primary sided inductive coupling element,
establishing a bi-directional data link between said power transmitting connector and said power receiving connector,
measuring at least one secondary sided operational parameter by means of a secondary sided sensing unit provided in said power receiving connector,
controlling the operation of said resonant circuit in response a combination of secondary sided control data indicative of said at least one secondary sided operational parameter, and
primary sided control data indicative of at least one primary sided operational parameter.

11. Method according to claim 10, wherein said primary sided operational parameter comprises a primary voltage ($V_p$) across said primary sided inductive coupling element, and wherein said secondary sided operational parameter comprises a secondary voltage ($V_s$) across said secondary sided inductive coupling element, and wherein, based on these parameters, a distance between the primary sided inductive coupling element and the secondary sided inductive coupling element is calculated.

12. Method according to claim 10, wherein said wherein said primary sided operational parameter comprises a current ($I_p$) flowing in said primary sided inductive coupling element, and wherein said secondary sided operational parameter comprises a secondary voltage ($V_s$) across said secondary sided inductive coupling element, and wherein, based on these parameters, a distance between the primary sided inductive coupling element and the secondary sided inductive coupling element is calculated.

13. Method according to one of the claims 10 to 12, further comprising disconnecting a load while performing the measurement of said secondary voltage.

14. Method according to claim 10, wherein said wherein said primary sided operational parameter comprises a current ($I_p$) flowing in said primary sided inductive coupling element or an auxiliary current ($I_{pm}$) flowing in a primary sided auxiliary winding ($L_{pm1}$), or an auxiliary voltage ($V_{pm}$) across said primary sided auxiliary winding ($L_{pm1}$), and wherein said secondary sided operational parameter comprises a secondary auxiliary voltage ($V_{ms}$) across a secondary sided auxiliary winding which is inductively coupled to said primary inductive coupling element or to said primary sided auxiliary winding ($L_{pm1}$), and wherein, based on these parameters, a distance between the primary sided inductive coupling element and the secondary sided inductive coupling element is calculated.

15. Method according to one of the claims 10 to 14, wherein the secondary sided control data are merged with data transmitted via the bi-directional data link between said power transmitting connector and said power receiving connector.

FIG. 1

EP 3 168 953 A1

FIG. 2

FIG. 3

FIG. 4

FIG. 5

*FIG. 6*

*FIG. 7*

Data →→ Serial-2-Parallel →m-bits→ DAC →→ X →→

Control →→ Serial-2-Parallel →n-bits→

*FIG. 8*

FIG. 9

FIG. 10

FIG. 11

*FIG. 12*

*FIG. 13*

FIG. 14

EP 3 168 953 A1

Europäisches
Patentamt

European
Patent Office

Office européen
des brevets

# EUROPEAN SEARCH REPORT

Application Number

EP 15 19 4497

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/306654 A1 (PARTOVI AFSHIN [US]) 16 October 2014 (2014-10-16) | 1,2, 6-10,13, 15 | INV. H02J5/00 |
| Y | * the whole document * | 3-5,11, 12 | |
| X | US 2013/005251 A1 (SOAR ROGER J [CA]) 3 January 2013 (2013-01-03) | 1,2, 6-10,13, 15 | |
| Y | * the whole document * | 3-5,11, 12,14 | |
| Y | US 2015/035379 A1 (KWON UI KUN [KR] ET AL) 5 February 2015 (2015-02-05) * the whole document * | 3 | |
| Y | US 2014/285143 A1 (KWON HYUK-CHOON [KR] ET AL) 25 September 2014 (2014-09-25) * the whole document * | 3 | |
| Y | EP 2 581 993 A1 (TYCO ELECTRONICS NEDERLAND BV [NL]; TYCO ELECTRONICS AMP GMBH [DE]) 17 April 2013 (2013-04-17) * the whole document * | 4 | TECHNICAL FIELDS SEARCHED (IPC) H02J B60L |
| Y | US 2010/066176 A1 (AZANCOT YOSSI [IL] ET AL) 18 March 2010 (2010-03-18) * the whole document * | 5 | |
| Y | WO 2008/114268 A2 (POWERMAT LTD [IL]; NIV NEHEMIA [IL]; AZANCOT YOSSI [IL]; BEN-SHALOM AM) 25 September 2008 (2008-09-25) * the whole document * | 11,12 | |
| Y | WO 2011/135571 A2 (POWERMAT LTD [IL]; WEISSENTERN ERAN [IL]; ROFE ARIK [IL]; BEN-SHALOM A) 3 November 2011 (2011-11-03) * the whole document * | 14 | |

The present search report has been drawn up for all claims

| Place of search | Date of completion of the search | Examiner |
|---|---|---|
| Munich | 29 January 2016 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 4497

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2016

| Patent document cited in search report | | Publication date | Patent family member(s) | | Publication date |
|---|---|---|---|---|---|
| US 2014306654 | A1 | 16-10-2014 | NONE | | |
| US 2013005251 | A1 | 03-01-2013 | NONE | | |
| US 2015035379 | A1 | 05-02-2015 | KR | 20150015716 A | 11-02-2015 |
| | | | US | 2015035379 A1 | 05-02-2015 |
| US 2014285143 | A1 | 25-09-2014 | CN | 105075066 A | 18-11-2015 |
| | | | EP | 2800234 A2 | 05-11-2014 |
| | | | EP | 2988392 A1 | 24-02-2016 |
| | | | KR | 20140115898 A | 01-10-2014 |
| | | | US | 2014285143 A1 | 25-09-2014 |
| | | | WO | 2014148863 A1 | 25-09-2014 |
| EP 2581993 | A1 | 17-04-2013 | CN | 104145384 A | 12-11-2014 |
| | | | EP | 2581993 A1 | 17-04-2013 |
| | | | JP | 2015503254 A | 29-01-2015 |
| | | | US | 2014252876 A1 | 11-09-2014 |
| | | | WO | 2013053731 A1 | 18-04-2013 |
| US 2010066176 | A1 | 18-03-2010 | US | 2010066176 A1 | 18-03-2010 |
| | | | US | 2012212073 A1 | 23-08-2012 |
| WO 2008114268 | A2 | 25-09-2008 | AU | 2008227850 A1 | 25-09-2008 |
| | | | AU | 2009227886 A1 | 12-11-2009 |
| | | | CA | 2681613 A1 | 25-09-2008 |
| | | | CN | 102106054 A | 22-06-2011 |
| | | | EP | 2140535 A2 | 06-01-2010 |
| | | | EP | 2154763 A2 | 17-02-2010 |
| | | | EP | 2161808 A2 | 10-03-2010 |
| | | | IL | 201087 A | 30-09-2013 |
| | | | JP | 2010522534 A | 01-07-2010 |
| | | | JP | 2013102693 A | 23-05-2013 |
| | | | KR | 20100037022 A | 08-04-2010 |
| | | | KR | 20100039271 A | 15-04-2010 |
| | | | US | 2010070219 A1 | 18-03-2010 |
| | | | US | 2010072825 A1 | 25-03-2010 |
| | | | US | 2010073177 A1 | 25-03-2010 |
| | | | US | 2012071091 A1 | 22-03-2012 |
| | | | US | 2014097677 A1 | 10-04-2014 |
| | | | US | 2014312688 A1 | 23-10-2014 |
| | | | WO | 2008114268 A2 | 25-09-2008 |
| WO 2011135571 | A2 | 03-11-2011 | CN | 103109333 A | 15-05-2013 |
| | | | EP | 2564403 A2 | 06-03-2013 |
| | | | JP | 2013529451 A | 18-07-2013 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 15 19 4497

This annex lists the patent family members relating to the patent documents cited in  the above-mentioned European search report.
The members are as contained in the European Patent Office EDP file on
The European Patent Office is in no way liable for these particulars which are merely given for the purpose of information.

29-01-2016

| Patent document cited in search report | Publication date | Patent family member(s) | | Publication date |
|---|---|---|---|---|
| | | KR | 20130105785 A | 26-09-2013 |
| | | US | 2013049484 A1 | 28-02-2013 |
| | | WO | 2011135571 A2 | 03-11-2011 |

For more details about this annex : see Official Journal of the European Patent Office, No. 12/82

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2581994 B1